# EUROPÄISCHE PATENTSCHRIFT

(11) **EP 2 527 807 B1**
(45) Veröffentlichungstag und Bekanntmachung des Hinweises auf die Patenterteilung: **29.03.2017**
(21) Anmeldenummer: 12002929.3
(22) Anmeldetag: 26.04.2012
(51) Int. Cl.: G01K 1/14, G01K 1/08

(54) **Temperaturfühler für ein Kontaktthermometer**
Temperature sensor for a contact thermometer
Sonde de température pour un thermomètre à contact

(30) Priorität: 27.05.2011 DE 102011103331
(43) Veröffentlichungstag der Anmeldung: 28.11.2012
(73) Patentinhaber: INOR Process AB, 20039 Malmö (SE)
(72) Erfinder: Mårtensson, Hans-Owe, 231 76 Beddingestrand (SE)
(74) Vertreter: Gesthuysen Patent- und Rechtsanwälte

(56) Entgegenhaltungen:
- EP-A1- 0 809 094
- EP-A1- 1 645 857
- US-B1- 6 297 723

## Beschreibung

Die Erfindung betrifft einen Temperaturfühler für ein Kontaktthermometer der Prozessmesstechnik mit einem Hüllrohr, mit wenigstens einem in dem prozessseitigen Ende des Hüllrohres angeordneten thermischen Sensorelement und mit wenigstens einem elektrischen Verbindungsmittel, wobei das elektrische Verbindungsmittel mit einer ersten Anschlussseite mit dem thermischen Sensorelement verbunden ist und in dem Hüllrohr zumindest bis zu dem auswerteseitigen Ende des Hüllrohres verläuft, so dass das thermische Sensorelement über eine zweite Anschlussseite des elektrischen Verbindungsmittels elektrisch kontaktierbar ist.

Derartige Temperaturfühler sind seit langem aus der Praxis bekannt, wobei gattungsgemäße Temperaturfühler unmittelbar oder mittelbar mit dem Medium in Kontakt treten, dessen Temperatur zu ermitteln ist. Kontaktthermometer werden vorliegend also im Unterschied gesehen zu solchen Thermometern, die ausschließlich die von einem Medium ausgehende Wärmestrahlung erfassen. Das Hüllrohr des Temperaturfühlers umgibt das thermische Sensorelement, wobei das thermische Sensorelement üblicherweise in der Nähe eines geschlossenen Endes des Hüllrohres angeordnet ist. Das thermische Sensorelement ist häufig in dem Hüllrohr mit einem wärmeleitenden Medium fixiert, wie beispielsweise mit einer wärmeleitenden Paste oder einem gut wärmeleitenden Kleber. Das Hüllrohr ist demnach an seinem prozessseitigen Ende geschlossen und schirmt das thermische Sensorelement gegen den Prozess ab. Häufig wird ein gattungsgemäßer Temperaturfühler aber auch als Einsatz in einem weiteren Schutzrohr verwendet, wobei das Schutzrohr dann in den Prozess hineinragt und dauerhaft den Prozess zur Umgebung hin abschirmt. Der Temperaturfühler wird dann mit seinem Hüllrohr in das zusätzliche Schutzrohr eingeführt. Das andere, auswerteseitige Ende des Hüllrohres endet jedenfalls meist in einem Gehäuse, wo eine Auswertung bzw. Weiterverarbeitung des Messsignals erfolgt.

Bei dem thermischen Sensorelement handelt es sich üblicherweise um einen temperaturabhängigen Widerstand oder um ein Thermoelement, das von außerhalb des Hüllrohres über das elektrische Verbindungsmittel elektrisch kontaktierbar ist. Bei dem Gehäuse kann es sich bei einem kompakten, modularen Aufbau um einen Kontaktkopf handeln, in dem eine elektrische Verbindung zwischen der Außenwelt und dem Sensorelement mittelbar über das elektrische Verbindungsmittel hergestellt wird. Der Kontaktkopf kann aber auch einen Transmitter aufweisen, der die Aufgabe hat, ein von dem Sensorelement stammendes Signal in ein standardisiertes Signal umzusetzen, das Signal zu filtern und zu linearisieren und einer übergeordneten Prozessüberwachung zur Verfügung zu stellen.

Das elektrische Verbindungsmittel realisiert üblicherweise wenigstens zwei elektrisch leitfähige Pfade zwischen dem thermischen Sensorelement und den außerhalb des Hüllrohres liegenden Anschlüssen. Bei Realisierungen des thermischen Sensorelements als temperaturabhängiger Widerstand wird der thermische Widerstand mit einer Spannung oder einem Strom beaufschlagt und entsprechend der resultierende Strom bzw. die resultierende Spannung ermittelt und über den sich daraus ergebenden Widerstandswert auf die Temperatur geschlossen. Bei der einfachsten Realisierung des elektrischen Verbindungsmittels mit zwei elektrisch leitenden Pfaden können sich verändernde Leitungswiderstände nicht kompensiert werden, weshalb häufig Realisierungen vorgezogen werden, bei denen das elektrische Verbindungsmittel drei oder sogar vier elektrische Leitungen als Referenzwiderstände aufweist.

Aus dem Stand der Technik (z.B. aus der US 6,297,723 B1) bekannte Temperaturfühler sind verhältnismäßig teuer, was einerseits an der relativ aufwendigen Herstellung andererseits aber auch an den verarbeiteten Materialien selbst liegt. Aus dem Stand der Technik bekannte Temperaturfühler weisen häufig eine Mineralisolierung der elektrischen Verbindungsmittel im Hüllrohr auf. Dabei sind die elektrischen Verbindungsmittel beispielsweise in einem Mineral- bzw. Keramikpulver gelagert und der Temperaturfühler muss nach Montage des thermischen Sensorelements einer Wärmebehandlung unterzogen werden, damit das Mineral- bzw. Keramikpulver trocknet und sich verfestigt. Abgesehen davon, dass elektrische Verbindungsmittel mit Mineralisolierung teuer sind, sind sie auch aufwendig im Fertigunasprozess handzuhaben, da darauf geachtet werden muss, dass das Mineralpulver bei Anbringen des thermischen Sensorelementes erhalten bleibt, was bei Hüllrohrdurchmessern von einigen Millimetern bis hinab zu Bruchteilen eines Millimeters schwierig ist und praktisch nicht der Automatisierung zugänglich ist

Aufgabe der vorliegenden Erfindung ist es, einen Temperaturfühler anzugeben, der eine einfache und kostengünstige Konstruktion aufweist, so dass der Temperaturfühler auch in Massenanwendungen einsetzbar ist, insbesondere bei solchen Anwendungen, die in einem vergleichsweise niedrigen Temperaturbereich, beispielsweise bis 300° C, liegen.

Der erfindungsgemäße Temperaturfühler, bei dem die zuvor hergeleitete und aufgezeigte Aufgabe gelöst ist, ist zunächst und im Wesentlichen dadurch gekennzeichnet, dass das elektrische Verbindungsmittel durch eine Leiterplatte - Verbindungsleiterplatte mit Leiterbahnen - gebildet ist. Der Begriff "Verbindungsleiterplatte" wird nachfolgend für die Leiterplatte oder den Leiterplattenabschnitt verwendet, die bzw der zur Realisierung des elektrischen Verbindungsmittels dient, der Begriff "Verbindungsleiterplatte" dient der genaueren Spezifizierung des allgemeineren Begriffs "Leiterplatte" und daher zur Klarstellung. Die erfindungsgemäße Verwendung einer Leiterplatte als elektrisches Verbindungsmittel anstelle der aus dem Stand der Technik bekannten Realisierung von elektrischen Verbindungsmitteln bringt den Vorteil einer erheblich vereinfachten Montage mit sich, die zudem auch automatisierbar ist, wobei Leiterplatten an sich, selbst dann, wenn sie besonderen Temperaturanforderungen genügen müssen, vergleichsweise preiswert zu bekannten Implementierungen sind.

Die Verbindungsleiterplatte muss aus einem solchen Material gefertigt sein, das in dem jeweiligen Anwendungsfall temperaturbeständig ist. Grundsätzlich eignen sich zunächst aber alle bekannten Leiterplatten zur Realisierung des erfindungsgemäßen Temperaturfühlers. Neben den bekannten Leiterplatten auf Phenol- oder Epoxidharzbasis sind auch Leiterplatten möglich, die auf dem Einsatz von Teflon oder Keramik beruhen. Die Realisierung des elektrischen Verbindungsmittels mit einer Verbindungsleiterplatte ist vorteilhaft, weil Leiterplatten praktisch in beliebiger Form auf einfache Weise herstellbar sind und elektrische Leitungen in beliebiger Art und Weise auf einer solchen Leiterplatte - einseitig, doppelseitig oder in einer Zwischenschicht der Leiterplatte - realisierbar sind.

Bei einer bevorzugten Ausgestaltung der Erfindung ist vorgesehen, dass das thermische Sensorelement auf der Verbindungsleiterplatte angeordnet ist, insbesondere als temperaturabhängiger Widerstand auf der Verbindungsleiterplatte realisiert ist und dort mit Leiterbahnen elektrisch verbunden, insbesondere verlötet ist.

Gemäss der Erfindung ist weiterhin vorgesehen, dass die zweite Anschlussseite des elektrischen Verbindungsmittels mit einem auf einer Leiterplatte - Kontaktleiterplatte - ausgebildeten Kontaktmittel verbunden ist. Der Begriff "Kontaktleiterplatte" wird wiederum zur klarstellenden Spezifizierung der Leiterplatte oder des Leiterplattenbereichs verwendet, auf dem das vorgenannte Kontaktmittel vorgesehen ist, der Begriff dient mithin ebenfalls der Klarstellung. Diese Weiterbildung der Erfindung ist von erheblicher Bedeutung. Aus dem Stand der Technik bekannte Kontaktmittel sind meistens durch einen sehr aufwendig gestalteten Keramikkopf realisiert, der meist Schraubverbindungen aufweist, um das Sensorelement über das elektrische Verbindungsmittel von extern kontaktieren zu können. Diese Keramikköpfe können ausschließlich der externen Kontaktierung dienen, sie können zusätzlich aber auch der Signalanpassung dienen, falls sie als Transmitter ausgestaltet sind. Der erfindungsgemäße Temperaturfühler verzichtet auf einen derartig aufwendigen Aufbau und ersetzt diesen durch eine einfache Kontaktleiterplatte, auf der ein Kontaktmittel vorgesehen ist, wobei mit dem Kontaktmittel vorzugsweise eine Schraubverbindung, eine Steckverbindung oder eine Schneidklemmverbindung zu einem externen Leiter herstellbar ist, was ebenfalls durch den Einsatz von Standard-Kontaktmitteln zur Bestückung von Leiterplatten möglich ist. Diese Ausgestaltung der Erfindung überwindet die Jahrzehnte vorherrschende Vorstellung, dass alle Elemente eines Temperaturfühlers möglichst maximalen Anforderungen genügen müssen.

Gemäss der Erfindung sind die Verbindungsleiterplatte und die Kontaktleiterplatte als separate Leiterplatten ausgeführt. Dies bringt den Vorteil mit sich, dass für die Verbindungsleiterplatte und die Kontaktleiterplatte unterschiedliche Leiterplattenmaterialien verwendet werden können. Diese Ausgestaltung erlaubt es, für die Verbindungsleiterplatte, also die der Mediumtemperatur zumindest bereichsweise ausgesetzte Leiterplatte, ein Leiterplattenmaterial mit erhöhter Temperaturstabilität zu verwenden, beispielsweise ein für Temperaturen größer als 300° C geeignetes Leiterplattenmaterial, insbesondere aus Polyimide.

Bei einem weiteren vorteilhaften Ausführungsbeispiel ist vorgesehen, dass die Kontaktleiterplatte aus einem Leiterplattenmaterial besteht, das bei geringeren Temperaturen langzeitstabil ist, insbesondere bei Temperaturen kleiner als 300 °C, insbesondere kleiner 250° C, bevorzugt auch kleiner 230° C. Dies ist deshalb gefahrlos möglich, weil die Kontaktleiterplatte an dem vom Prozess abgewandten Ende des Temperaturfühlers vorgesehen ist und deshalb nur deutlich geringere Anforderungen hinsichtlich der Temperaturstabilität erfüllen muss. Der Vorteil liegt darin, dass erheblich preiswertere Leiterplattenmaterialien verwendet werden können, als dies für erhöhte Temperaturanforderungen der Fall ist. Dies ermöglicht es weiter, die Kosten für den erfindunggemäßen Temperaturfühler zu reduzieren.

Bei einer weiteren Ausgestaltung ist vorgesehen, dass die Verbindungsleiterplatte an ihren parallel zu dem Hüllrohr verlaufenden Kanten Breitstellen aufweist, die eine Positionierung der Verbindungsleiterplatte mittig im Hüllrohr bewirken. Durch die Breitstellen wird zudem die Kontaktfläche zwischen Verbindungsleiterplatte und Hüllrohr minimiert, was das Einschieben der Verbindungsleiterplatte in das Hüllrohr vereinfacht.

Bei einem weiteren Ausführungsbeispiel ist vorgesehen, das auf der Verbindungsleiterplatte eine elektrische Anordnung realisiert ist, insbesondere eine elektrische Anordnung zur Erkennung einer Leckage des Hüllrohres, was bei Realisierungen im Stand der Technik nur mit erheblichem Aufwand möglich ist. Eine solche elektrische Anordnung kann im einfachsten Fall beispielsweise nur aus sich gegenüberstehenden Kontaktflächen bestehen, wobei zur Leckageerkennung die Impedanz zwischen den Kontaktflächen ausgewertet wird.

In weiteren bevorzugten Ausgestaltungen ist eine elektrische Schaltung, insbesondere eine Transmitter-Elektronik, direkt auf der Verbindungsleiterplatte und/oder der Kontaktleiterplatte realisiert, vorzugsweise auf der Kontaktleiterplatte. Aufgrund der Leiterplattenkonstruktion ist dies auf sehr einfache und kostengünstige Weise möglich, da für die Schaltung kein separater Schaltungsträger erforderlich ist. Zudem wird bei der vorbeschriebenen Realisierung derartiger Schaltungen gegenüber den jedenfalls bei Temperaturfühlern konventionellen Implementierungen Platz gespart, was schlanke Konstruktionen erlaubt.

Im Einzelnen gibt es nun verschiedene Möglichkeiten, den erfindungsgemäßen Temperaturfühler auszugestalten und weiterzubilden. Dazu wird verwiesen auf die dem Patentanspruch 1 nachgeordneten Patentansprüche und auf die Beschreibung bevorzugter Ausführungsbeispiele in Verbindung mit der Zeichnung. In der Zeichnung zeigen
- Fig. 1: einen Temperaturfühler mit einem Kontaktmittel gemäß dem Stand der Technik,
- Fig. 2: ein erstes Ausführungsbeispiel eines erfindungsgemäßen Temperaturfühlers mit Kontaktmittel in perspektivischer Darstellung,
- Fig. 3: den erfindungsgemäßen Temperaturfühler gemäß Fig. 2 in einer ersten Seitenansicht,
- Fig. 4: den erfindungsgemäßen Temperaturfühler gemäß Fig. 2 in einer weiteren Seitenansicht,
- Fig. 5: das Kontaktmittel des Temperaturfühlers gemäß dem ersten Ausführungsbeispiel in Draufsicht und
- Fig. 6: ein weiteres Ausführungsbeispiel eines erfindungsgemäßen Temperaturfühlers mit einem Gehäuse und Schutzrohr in Explosionsdarstellung.

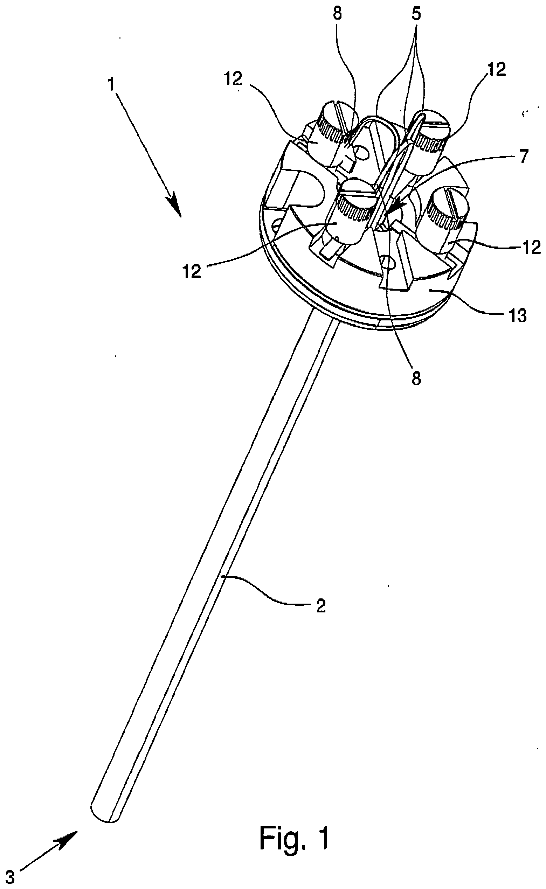

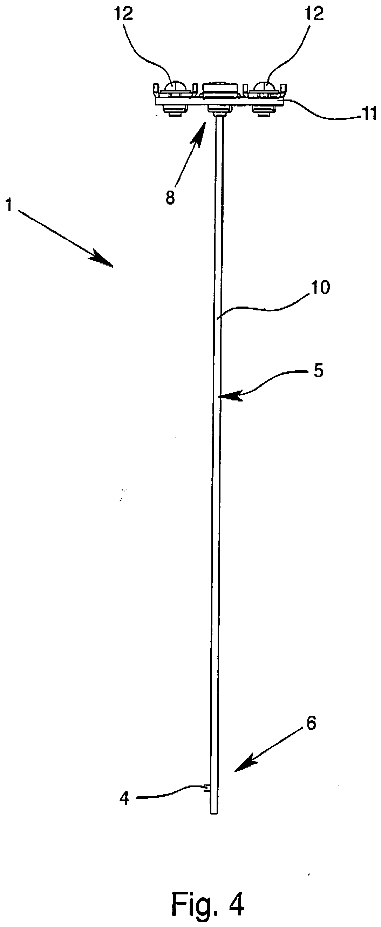

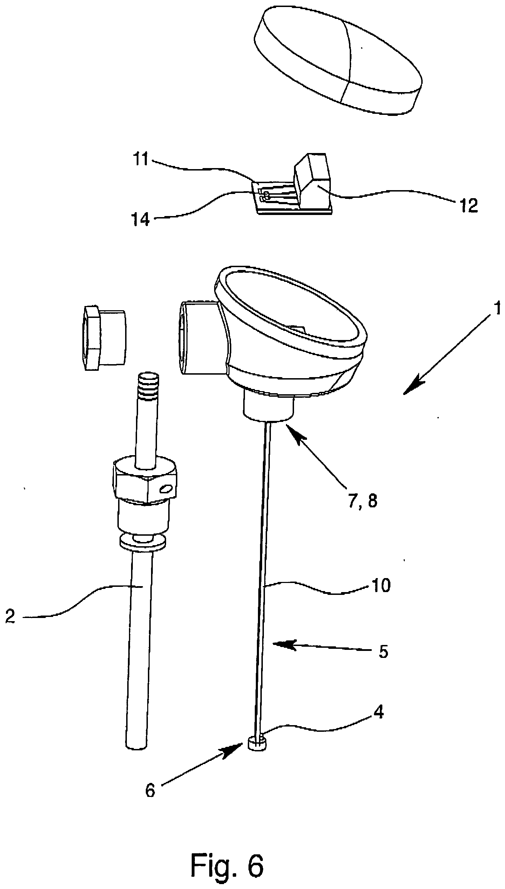

In Fig. 1 ist dargestellt ein aus dem Stand der Technik bekannter Temperaturfühler 1, der für Kontaktthermometer der Prozessmesstechnik gedacht ist. Der Temperaturfühler 1 weist ein Hüllrohr 2 auf, in dessen prozessseitigem Ende 3 ein thermisches Sensorelement angeordnet ist, das in Fig. 1 nicht dargestellt ist, das in den Fig. 4 und 6 mit Bezugszeichen 4 versehen ist.

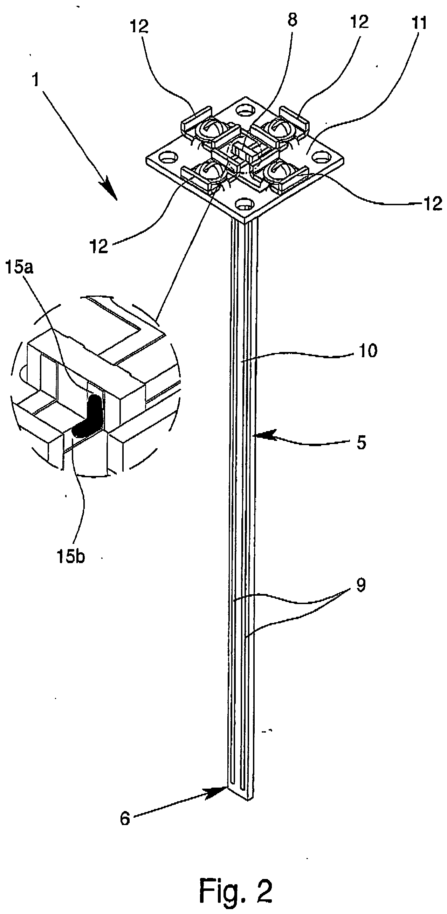

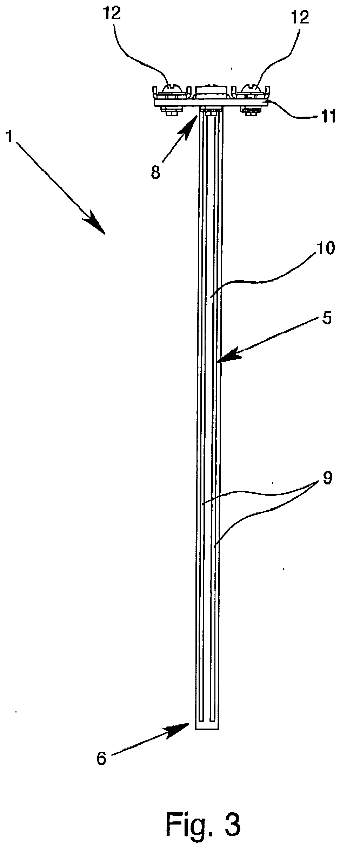

Der Temperaturfühler 1 weist ferner als elektrisches Verbindungsmittel 5 elektrische Leitungen auf, wobei dieses elektrische Verbindungsmittel 5 - wie bei der erfindungsgemäßen Variante in den Fig. 2 bis 4 und 6 zu erkennen - mit einer ersten Anschlussseite 6 mit dem thermischen Sensorelement 4 verbunden ist. Das elektrische Verbindungsmittel 5 verläuft dann in dem Hüllrohr 2 bis zu dem auswerteseitigen Ende 7 des Hüllrohrs 2, so dass das thermische Sensorelement 4 grundsätzlich über eine zweite Anschlussseite 8 des elektrischen Verbindungsmittels 5 elektrisch kontaktierbar ist Wie in Fig. 1 zu erkennen ist, besteht das elektrische Verbindungsmittel 5 im Stand der Technik aus einer Mehrzahl an elektrischen Leitern, vorliegend aus drei Leitern, wobei zwei dieser Leiter mit einem Anschluss des thermischen Sensorelements verbunden sind und ein weiterer Leiter mit dem zweiten Ende des thermischen Sensorelements verbunden ist.

Bei dem Ausführungsbeispiel aus dem Stand der Technik gemäß Fig. 1 ist das elektrische Verbindungsmittel 5 in Form der Leitungen mit einer in dem Hüllrohr 2 befindlichen Mineralisolierung versehen, die insbesondere bei Herstellung einer elektrischen Verbindung zwischen dem Sensorelement und dem elektrischen Verbindungsmittel 5 problematisch ist, eine Wärmebehandlung notwendig macht und kostspielig ist.

Bei dem in den Fig. 2, 3, 4 und 6 dargestellten Temperaturfühler 1 ist das elektrische Verbindungsmittel 5 durch eine Leiterplatte mit Leiterbahnen 9 gebildet, wobei diese, das Verbindungsmittel 5 bildende Leiterplatte, nachfolgend als Verbindungsleiterplatte 10 bezeichnet wird. Die Verbindungsleiterplatte 10 weist auf jeder Seite jeweils zwei Leiterbahnen 9 auf, die einen Kontakt des Sensorelements 4 über die zweite Anschlussseite 8 - also die Anschlussseite, die sich in der Nähe des auswerteseitigen Endes 7 des Hüllrohres 2 befindet - elektrisch kontaktierbar ist.

Besonders praktisch ist, dass das thermische Sensorelement 4 direkt auf der Verbindungsleiterplatte 10 anordenbar und auch angeordnet ist, wobei vorliegend das thermische Sensorelement 4 als ein temperaturabhängiger Widerstand vom Typ PT100 realisiert ist.

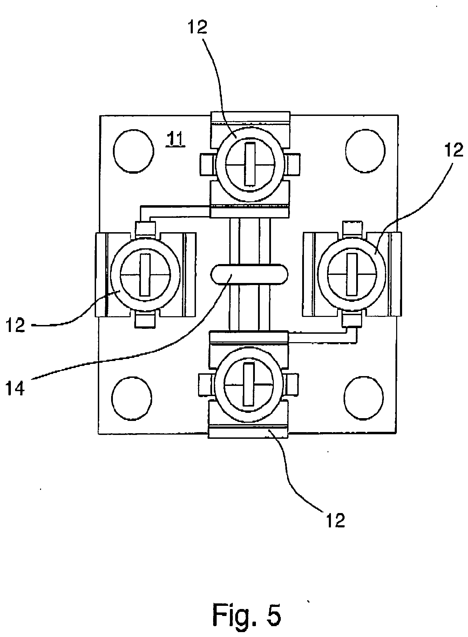

Besonders vorteilhaft ist bei den in den Fig. 2 bis 6 dargestellten Ausführungsbeispielen eines Temperaturfühlers 1, dass die zweite Anschlussseite 8 des elektrischen Verbindungsmittels 5 mit einem auf einer Leiterplatte 11 ausgebildeten Kontaktmittel 12 verbunden ist, wobei diese mit dem Kontaktmittel 12 ausgestattete Leiterplatte 11 als Kontaktleiterplatte 11 bezeichnet ist. In dem Ausführungsbeispiel gemäß den Fig. 2 bis 5 ist das Kontaktmittel 12 in Schraubtechnik realisiert. Schraubverbindungen sind auch im Stand der Technik bekannt, wozu nochmals Bezug genommen wird auf die den Stand der Technik darstellende Fig. 1. Im Stand der Technik ist das Kontaktmittel 12 im Zusammenhang mit einem recht aufwendig gestalteten Keramikkopf 13 ausgebildet, wobei dieser Keramikkopf 13 zur Montage häufig auch einen recht aufwendigen vorspannbaren Federmechanismus aufweist; diese Konstruktion ist zwar in vielerlei Hinsicht robust, sie ist aber auch häufig für den konkreten Anwendungsfall zu aufwendig, schwer und teuer. Demgegenüber ist die Realisierung des auf der Kontaktleiterplatte 11 vorgesehenen Kontaktmittels 12 sehr einfach und kostengünstig, dies insbesondere deshalb, weil durchweg Standardbauelemente verwendet werden können.

In dem in Fig. 6 dargestellten Ausführungsbeispiel ist das Kontaktmittel 12 in einer Stecktechnik realisiert, so dass ein externer Leiter einfach in das Kontaktmittel 12 eingeführt werden kann und dort über einen Klemmmechanismus sicher gehalten wird.

Die in den Fig. 2 bis 6 dargestellten Ausführungsbeispiele haben ferner gemeinsam, dass die Verbindungsleiterplatte 10 und die Kontaktleiterplatte 11 als separate Leiterplatten ausgeführt sind und im Wesentlichen senkrecht zueinander angeordnet sind. Die sichere Verbindung zwischen der Verbindungsleiterplatte 10 und der Kontaktleiterplatte 11 wird in den dargestellten Ausführungsbeispielen dadurch realisiert, dass die Kontaktleiterplatte 11 eine Ausnehmung 14 aufweist, die der Aufnahme eines korrespondierenden Abschnitts der Verbindungsleiterplatte 10 dient. Durch das Ineinandergreifen der Verbindungsleiterplatte 10 und der Kontaktleiterplatte 11 stützen sich die beiden Leiterplatten gegeneinander ab. Die Ausnehmung 14 in der Verbindungsleiterplatte 10 kann so eng gefertigt werden, dass eine leichte Presspassung realisiert ist.

In den dargestellten Ausführungsbeispielen weisen die Verbindungsleiterplatte 10 und die Kontaktleiterplatte 11 im Bereich ihrer gemeinsamen Verbindungsstelle einander gegenüberstehende Leiterflächen 15a, 15b auf, wobei die gegenüberstehenden Leiterflächen 15a, 15b miteinander elektrisch verbunden, hier verlötet sind, so dass die Verbindung zwischen der Verbindungsleiterplatte 10 und der Kontaktleiterplatte 11 zusätzlich stabilisiert ist.

Die einander gegenüberstehenden und durch Verlöten elektrisch miteinander verbundenen Leiterflächen 15a, 15b der Verbindungsleiterplatte 10 und der Kontaktleiterplatte 11 dienen bei den dargestellten Temperaturfühlern 1 auch zur Fortsetzung des elektrischen Verbindungsmittels 5 bzw. der elektrischen Leiterbahnen 9 der Verbindungsleiterplatte 10 auf die Kontaktleiterplatte 11, so dass auf sehr einfache Weise auch eine elektrische Verbindung zu dem Kontaktmittel 12 hergestellt ist.

Bei den in den Fig. 2 bis 6 dargestellten Ausführungsbeispielen ist die Verbindungsleiterplatte 10 aus Standard-Leiterplattenmaterial hergestellt, die Kontaktleiterplatten 11 sind aus temperaturbeständigerem Material gefertigt, vorliegend aus hochfestem, E-Glas verstärkten Polyimide.

Die dargestellten und beschriebenen Temperaturfühler 1 eignen sich vor allem für Anwendungen in einem vergleichsweise niedrigen Temperaturmessbereich, der beispielsweise bis 200 °C reicht. Prozessthermometer - wie beispielweise dargestellt in Fig. 6 -, die mit einem Temperaturfühler unter der beschriebenen Verwendung von Leiterplatten realisiert sind, weisen einen erheblichen Kostenvorteil auf und eignen sich demzufolge vor allem für die automatisierte Massenfertigung und für Massenanwendungen, z. B. auch im Bereich von Privathaushalten, beispielsweise im Rahmen der Heizungstechnik wie z. B. bei Fernwärmeübergabestationen.

## Patentansprüche

1. Temperaturfühler (1) für ein Kontaktthermometer der Prozessmesstechnik mit einem Hüllrohr (2), mit wenigstens einem in dem prozessseitigen Ende (3) des Hüllrohres angeordneten thermischen Sensorelement (4) und mit wenigstens einem elektrischen Verbindungsmittel (5), wobei das elektrische Verbindungsmittel (5) mit einer ersten Anschlussseite (6) mit dem thermischen Sensorelement (4) verbunden ist und in dem Hüllrohr (2) zumindest bis zu dem auswerteseitigen Ende (7) des Hüllrohres (2) verläuft, so dass das thermische Sensorelement (2) über eine zweite Anschlussseite (8) des elektrischen Verbindungsmittels (5) elektrisch kontaktierbar ist, wobei das elektrische Verbindungsmittel (5) durch eine Verbindungsleiterplatte (10) mit Leiterbahnen (9) gebildet ist,
**dadurch gekennzeichnet,**
**dass** die zweite Anschlussseite (8) des elektrischen Verbindungsmittels (5) mit einem auf einer Kontaktleiterplatte (11) ausgebildeten Kontaktmittel (12) verbunden ist, dass die Verbindungsleiterplatte (10) und die Kontaktleiterplatte (11) als separate Leiterplatten ausgeführt sind, dass die Verbindungsleiterplatte (10) und die Kontaktleiterplatte (11) im Bereich ihrer gemeinsamen Verbindungsstelle einander gegenüberstehende Leiterflächen (15a, 15b) aufweisen und die gegenüberstehenden Leiterflächen (15a, 15b) miteinander elektrisch verbunden sind und dass die einander gegenüberstehenden und miteinander elektrisch verbundenen Leiterflächen (15a, 15b) der Verbindungsleiterplatte (10) und der Kontaktleiterplatte (11) zur Fortsetzung des elektrischen Verbindungsmittels (5) der Verbindungsleiterplatte (10) auf die Kontaktleiterplatte (11) dienen.

2. Temperaturfühler (1) nach Anspruch 1, **dadurch gekennzeichnet, dass** das thermische Sensorelement (4) auf der Verbindungsleiterplatte (10) angeordnet ist, wobei das thermische Sensorelement (4) insbesondere ein temperaturabhängiger Widerstand oder ein Thermoelement ist.

3. Temperaturfühler (1) nach Anspruch 1 oder 2, **dadurch gekennzeichnet, dass** die Verbindungsleiterplatte (10) und die Kontaktleiterplatte (11) senkrecht zueinander angeordnet sind und dass die Kontaktleiterplatte (11) eine Ausnehmung (14) aufweist zur Aufnahme der Verbindungsleiterplatte (10).

4. Temperaturfühler (1) nach einem der Ansprüche 1 bis 3, **dadurch gekennzeichnet, dass** die Verbindungsleiterplatte (10) an ihren parallel zu dem Hüllrohr (2) verlaufenden Kanten Breitstellen aufweist, die eine Positionierung der Verbindungsleiterplatte (10) mittig im Hüllrohr (2) bewirken.

## Claims

1. Temperature detector (1) for a contact thermometer of process measurement technology comprising a thermowell (2), at least one thermal sensor element (4) arranged in a process-side end (3) of the thermowell, and at least one electrical connecting means (5), wherein the electrical connecting means (5) is connected to the thermal sensor element (4) with a first connection side (6) and extending in the thermowell (2) at least up to an evaluation-side end (7) of the thermowell (2), so that the thermal sensor element (2) can be electrically contacted via a second connection side (8) of the electrical connecting means (5), wherein the electrical connecting means (5) is formed by a connection printed circuit board (10) with conducting paths (9), **characterized in**
**that** the second connection side (8) of the electrical connecting means (5) is connected to a contact means (12) formed on a contact printed circuit board (11), that the connection printed circuit board (10) and the contact printed circuit board (11) are separately formed, that the connection printed circuit board (10) and the contact printed circuit board (11) have conducting areas (15a, 15b) opposing one another in an area of a common connection point and the opposing conducting areas (15a, 15b) are electrically connected to one another, that the conducting areas (15a, 15b) opposing one another and being electrically connected to one another of the connection printed circuit board (10) and the contact printed circuit board (11) are used for extending the electrical connecting means (5) of the connection printed circuit board (10) to the contact printed circuit board (11).

2. Temperature detector (1) according to claim 1, **characterized in that** the thermal sensor element (4) is arranged on the connection printed circuit board (10), wherein the thermal sensor element (4) is a temperature-dependent resistor or a thermocouple.

3. Temperature detector (1) according to claim 1 or 2, **characterized in that** the connection printed circuit board (10) and the contact printed circuit board (11) are arranged perpendicular to one another and that the contact printed circuit board (11) has a recess for receiving the connection printed circuit board (10).

4. Temperature detector (1) according to any one of claims 1 to 3, **characterized in that** the connection printed circuit board (10) has wide edges sections running parallel to a lengthwise direction of the thermowell (2) in a manner causing the connection printed circuit board (10) to be positioned centrally in the thermowell (2).

## Revendications

1. Sonde thermique (1) pour un thermomètre à contact relevant de la technique de mesure de processus, avec un tube de gainage (2) avec au moins un élément capteur thermique (4) placé dans l'extrémité (3) côté processus du tube de gainage et avec au moins un moyen de liaison (5) électrique, par un premier côté (6) de connexion, le moyen de liaison (5) électrique étant assemblé avec l'élément capteur thermique (4) et s'écoulant dans le tube de gainage (2) au moins jusqu'à l'extrémité (7) côté évaluation du tube de gainage (2), de sorte que l'élément capteur thermique (2) puisse être électriquement contacté par l'intermédiaire d'un deuxième côté (8) de connexion du moyen de liaison (5) électrique, le moyen de liaison (5) électrique étant formé par une carte de circuits imprimés (10) de liaison avec des pistes conductives (9),
**caractérisée en ce que**
le deuxième côté (8) de connexion du moyen de liaison (5) électrique est relié avec un moyen de contact (12) conçu sur une carte de circuits imprimés (11) de contact, **en ce que** la carte de circuits imprimés (10) de liaison et la carte de circuits imprimés (11) de contact sont réalisées en tant que cartes de circuits imprimés séparées, **en ce que** dans la zone de leur point de liaison commun, la carte de circuits imprimés (10) de liaison et la carte de circuits imprimés (11) de contact comportent des surfaces de conducteurs (15a, 15b) mutuellement opposées et les surfaces de conducteurs (15a, 15b) opposées sont électriquement reliées l'une à l'autre et **en ce que** les surfaces de conducteurs (15a, 15b) mutuellement opposées et électriquement reliées l'une à l'autre de la carte de circuits imprimés (10) de liaison et de la carte de circuits imprimés (11) de contact servent à poursuivre le moyen de liaison (5) électrique de la carte de circuits imprimés (10) de liaison sur la carte de circuits imprimés (11) de contact.

2. Sonde thermique (1) selon la revendication 1, **caractérisée en ce que** l'élément capteur thermique (4) est placé sur la carte de circuits imprimés (10) de liaison, l'élément capteur thermique (4) étant notamment une résistance dépendant de la température ou un thermocouple.

3. Sonde thermique (1) selon la revendication 1 ou la revendication 2, **caractérisée en ce que** la carte de circuits imprimés (10) de liaison et la carte de circuits imprimés (11) de contact sont placées à la perpendiculaire l'une de l'autre et **en ce que** la carte de circuits imprimés (11) de contact comporte un évidement (14) destiné à recevoir la carte de circuits imprimés (10) de liaison.

4. Sonde thermique (1) selon l'une quelconque des revendications 1 à 3, **caractérisée en ce que** sur ses arêtes s'écoulant à la parallèle du tube de gainage (2), la carte de circuits imprimés (10) de liaison comporte des zones élargies qui provoquent un positionnement de la carte de circuits imprimés (10) de liaison au centre dans le tube de gainage (2).
